# EUROPEAN PATENT APPLICATION

(11) **EP 4 694 242 A1**
(43) Date of publication of application: **11.02.2026**
(21) Application number: 23929221.2
(22) Date of filing: 29.03.2023
(51) Int. Cl.: H04W 8/22

(54) **WIRELESS COMMUNICATION METHODS, AND DEVICES**

(71) Applicant: Guangdong OPPO Mobile Telecommunications Corp., Ltd., Wusha, Chang'an, Dongguan 523860 (CN)
(72) Inventor: QI, Yinan, Dongguan Guangdong 523860 (CN)
(74) Representative: RGTH
(86) International application number: PCT/CN2023/084598
(87) International publication number: WO 2024/197622

(57) **Abstract**

Provided in the embodiments of the present application are wireless communication methods, and devices. An AMP device and a network side negotiate whether the AMP device supports uplink FDMA and/or downlink FDMA, and designing uplink FDMA and/or downlink FDMA can improve the communication performance of AMP devices. A wireless communication method comprises: an AMP device and a network side negotiate first information, wherein the first information is used for indicating whether the AMP device supports uplink FDMA and/or downlink FDMA.

## Description

### TECHNICAL FIELD

Embodiments of the present disclosure relate to the field of communications, and in particular, to a wireless communication method and devices.

### BACKGROUND

At present, in order to achieve low power communication, an ambient power (AMP) device has been introduced. The AMP device may obtain power required for work via various ambient powers such as wireless radio frequency power, light power, solar power, thermal power, and mechanical power. Considering capabilities and power consumption limitations of the AMP device, how to improve communication performance of the AMP device is a problem to be solved.

### SUMMARY

The embodiments of the present disclosure provides a wireless communication method and devices, where an AMP device negotiates with a network side on whether the AMP device supports uplink FDMA and/or downlink FDMA, and communication performance of the AMP device may be improved by designing the uplink FDMA and/or the downlink FDMA.

In a first aspect, a wireless communication method is provided, which includes:
negotiating, by an AMP device, first information with a network side; where the first information is used for indicating whether the AMP device supports uplink FDMA and/or downlink FDMA.

In a second aspect, a wireless communication method is provided, which includes:
negotiating, by an network device, first information with an AMP device; where the first information is used for indicating whether the AMP device supports uplink FDMA and/or downlink FDMA.

In a third aspect, an AMP device is provided, which is configured to perform the method in the first aspect.

Specifically, the AMP device includes a functional module for performing the method in the first aspect.

In a fourth aspect, a network device is provided, which is configured to perform the method in the second aspect.

Specifically, the network device includes a functional module for performing the method in the second aspect.

In a fifth aspect, an AMP device is provided, which includes a processor and a memory; the memory is configured to store a computer program, and the processor is configured to call the computer program stored in the memory and run the computer program, to enable the AMP device to perform the method in the first aspect.

In a sixth aspect, a network device is provided, which includes a processor and a memory; the memory is configured to store a computer program, and the processor is configured to call the computer program stored in the memory and run the computer program, to enable the network device to perform the method in the second aspect.

In a seventh aspect, an apparatus is provided, which is configured to implement the method in any one of the first aspect to the second aspect.

Specifically, the apparatus includes: a processor, which is configured to call a computer program from a memory and run the computer program, to enable a device equipped with the apparatus to perform the method in any one of the first aspect to the second aspect.

In an eighth aspect, a computer-readable storage medium is provided, which is configured to store a computer program, where the computer program enables a computer to perform the method in any one of the first aspect to the second aspect.

In a ninth aspect, a computer program product is provided, which includes computer program instructions, where the computer program instructions enable a computer to perform the method in any one of the first aspect to the second aspect.

In a tenth aspect, a computer program is provided, where the computer program, when run on a computer, enables the computer to perform the method in any one of the first aspect to the second aspect.

Through above technical solutions, the AMP device negotiates with the network side on whether the AMP device supports the uplink FDMA and/or the downlink FDMA, and by designing uplink FDMA and/or downlink FDMA, the communication performance of the AMP device may be improved.

### BRIEF DESCRIPTION OF THE DRAWINGS

FIG. 1 is a schematic diagram of a communication system architecture to which embodiments of the present disclosure are applied.
FIG. 2 is a schematic diagram of a WUR frame structure provided in the present disclosure.
FIG. 3 is a schematic flowchart of a wireless communication method provided according to embodiments of the present disclosure.
FIG. 4 is a schematic diagram of a multiple channel filter provided according to embodiments of the present disclosure.
FIGS. 5 to 7 are schematic diagrams of uplink FDMA channels provided according to embodiments of the present disclosure, respectively.
FIGS. 8 to 10 are schematic diagrams of downlink FDMA channels provided according to embodiments of the present disclosure, respectively.
FIG. 11 is a schematic block diagram of an AMP device provided according to embodiments of the present disclosure.
FIG. 12 is a schematic block diagram of a network device provided according to embodiments of the present disclosure.
FIG. 13 is a schematic block diagram of a communication device provided according to embodiments of the present disclosure.
FIG. 14 is a schematic block diagram of an apparatus provided according to embodiments of the present disclosure.
FIG. 15 is a schematic block diagram of a communication system provided according to an embodiment of the present disclosure.

### DETAILED DESCRIPTION

Technical solutions in the embodiments of the present disclosure will be described below in conjunction with the accompanying drawings in the embodiments of the present disclosure. It is apparent that the described embodiments are merely part but not all of the embodiments of the present disclosure. With respect to the embodiments in the present disclosure, all other embodiments obtained by those skilled in the art without creative efforts shall fall within the protection of the present disclosure.

The technical solutions of the embodiments of the present disclosure may be applied to various communication systems, such as wireless local area networks (WLANs), wireless fidelity (Wi-Fi) or other communication systems. For example, the technical solutions of the embodiments of the present disclosure may further be applied to: a global system of mobile communication (GSM) system, a code division multiple access (CDMA) system, a wideband code division multiple access (WCDMA) system, a general packet radio service (GPRS), a long term evolution (LTE) system, an advanced long term evolution (LTE-A) system, a new radio (NR) system, an evolution system of the NR system, an LTE-based access to unlicensed spectrum (LTE-U) system, an NR-based access to unlicensed spectrum (NR-U) system, a non-terrestrial communication network (Non-Terrestrial Network, NTN) system, a universal mobile telecommunication system (UMTS), WLANs, Internet of Things (IoT), a fifth-generation (5th-Generation, 5G) communication system, a sixth-generation (6th-Generation, 6G) communication system, or other communication systems.

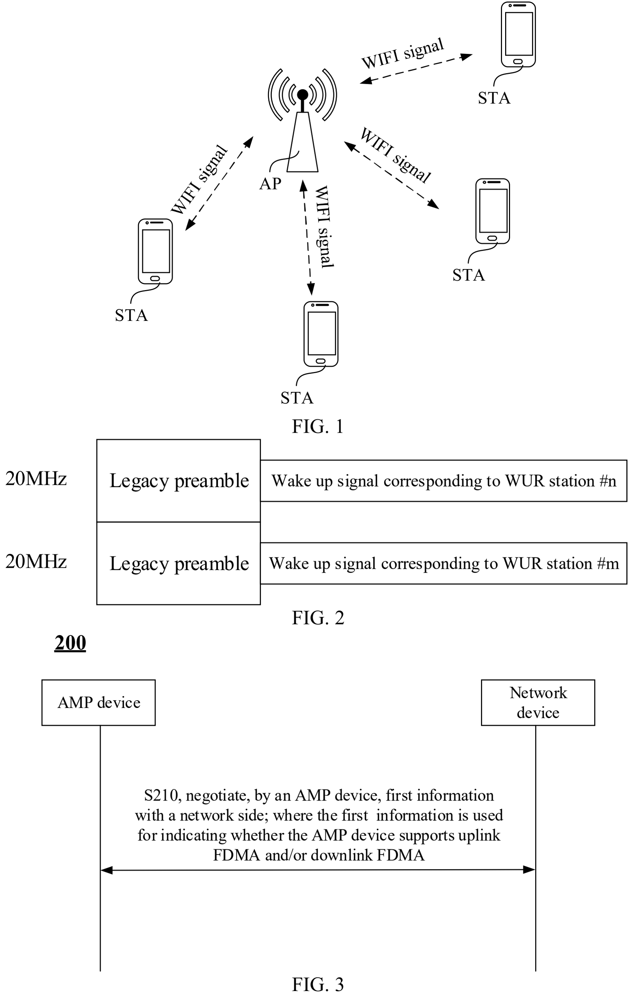

Referring to FIG. 1, a schematic diagram of a wireless communication system provided in an embodiment of the present disclosure is illustrated. As illustrated in FIG. 1, the wireless communication system may include: an access point (AP) and stations (STAs).

In some scenarios, the AP may be referred to as an AP STA. That is, in a sense, the AP is also a kind of STA. In some scenarios, the STA is also referred to as a non-AP STA.

In some embodiments, the STAs may include the AP STA and the non-AP STA. The communication in the communication system may be communication between the AP and the non-AP STA, or communication between the non-AP STAs, or communication between the STA and a peer STA. The peer STA may refer to a device for peer communicating with the STA. For example, the peer STA may be the AP or the non-AP STA.

The AP is equivalent to a bridge connecting a wired network and a wireless network, and the main function of the AP is to connect various wireless network clients together and then connect the wireless network to Ethernet. An AP device may be a terminal device (e.g., a mobile phone) with a Wi-Fi chip or a network device (e.g., a router) with a Wi-Fi chip.

It should be understood that a role of the STA in the communication system is not absolute. For example, in some scenarios, in a case where the mobile phone is connected to the router, the mobile phone is a non-AP STA. In a case where the mobile phone serves as a hotspot for other mobile phones, the mobile phone plays the role of the AP.

The AP and non-AP STA may be devices used in Internet of Vehicles, or IoT nodes or sensors in the IoT, or smart cameras, smart remote controls, smart water meters or electricity meters in a smart home, or sensors in a smart city.

In some embodiments, the non-AP STA may support the 802.11be standard. The non-AP STA may also support various current and future WLAN standards of 802.11 family, such as 802.11ax, 802.11ac, 802.11n, 802.11g, 802.11b and 802.11a.

In some embodiments, the AP may be a device supporting the 802.11be standard. The AP may also be a device that supports various current and future WLAN standards of the 802.11 family, such as 802.11ax, 802.11ac, 802.11n, 802.11g, 802.11b, and 802.11a.

In the embodiments of the present disclosure, the STA may be a mobile phone, a pad, a computer, a virtual reality (VR) device, an augmented reality (AR) device, a wireless device in industrial control, a set-top box, a wireless device in self driving, an in-vehicle communication device, a wireless device in remote medical, a wireless device in smart grid, a wireless device in transportation safety, a wireless device in a smart city, or a wireless device in a smart home, a wireless communication chip, an application specific integrated circuit (ASIC), or a system on chip (SOC), etc. each of which supports WLAN/WiFi technology.

The frequency bands supported by the WLAN technology may include but are not limited to, low frequency bands (e.g., 2.4 GHz, 5 GHz, or 6 GHz) and high frequency bands (e.g., 45 GHz or 60 GHz).

There are one or more links between the STA and the AP. In some embodiments, the station and the AP support multi-band communications. For example, the STA and the AP communicate simultaneously in the frequency bands of 2.4 GHz, 5 GHz, 6 GHz, 45 GHz, and 60 GHz, or communicate simultaneously on different channels in the same frequency band (or different frequency bands), which may improve communication throughput and/or reliability between devices. This kind of device generally refers to as a multi-frequency band device, or a multi-link device (MLD), and sometimes also refers to as a multi-link entity or a multi-frequency band entity. The multi-link device may be an access point device or a station device. In response to the multi-link device being the access point device, the multi-link device includes one or more APs; in response to the multi-link device being the station device, the multi-link device includes one or more non-AP STAs.

The multi-link device including one or more APs may be referred to as an access point multi-link device (AP MLD), and the multi-link device including one or more non-AP STAs may be referred to as a non access point multi-link device (non-AP MLD).

In the embodiments of the present disclosure, the AP may include multiple APs, the non-AP may include multiple STAs, multiple links may be formed between the APs within the AP and the STAs within the non-AP, and data communication may be performed between an AP within the AP and a corresponding STA within the Non-AP via a corresponding link.

The AP is a device deployed in the WLAN to provide a wireless communication function for the STA. The station may include: a user equipment (UE), an access terminal, a user unit, a user station, a mobile station, a mobile console, a remote station, a remote terminal, a mobile device, a wireless communication device, a user agent, or a user apparatus, or the like. Optionally, the STA may further be a cellular phone, a cordless phone, a session initiation protocol (SIP) phone, a wireless local loop (WLL) station, a personal digital assistant (PDA), a handheld device with a wireless communication function, a computing device or another processing device connected to a wireless modem, an in-vehicle device, or a wearable device, which will not be limited in the embodiments of the present disclosure.

Optionally, both the STA and the AP support the IEEE 802.11 standard.

In some embodiments, the communication system in the embodiments of the present disclosure may be applied to a carrier aggregation (CA) scenario, or a dual connectivity (DC) scenario, and also be applied to a standalone (SA) networking scenario, or a non-standalone (NSA) networking scenario.

In some embodiments, the communication system in the embodiments of the present disclosure may be applied to an unlicensed spectrum, where the unlicensed spectrum may also be considered as a shared spectrum; alternatively, the communication system in the embodiments of the present disclosure may also be applied to a licensed spectrum, where the licensed spectrum may also be considered as an unshared spectrum.

In some embodiments, the communication system in the embodiments of the present disclosure may be applied to the FR1 frequency band (corresponding to a frequency band range of 410 MHz to 7.125 GHz), and may further be applied to the FR2 frequency band (corresponding to a frequency band range of 24.25 GHz to 52.6 GHz), and may further be applied to new frequency bands such as high frequency bands corresponding to a frequency band range of 52.6 GHz to 71 GHz or corresponding to a frequency band range of 71 GHz to 114.25 GHz.

It should be understood that the terms "system" and "network" are often used interchangeably herein. The term "and/or" in herein is merely a description of the association relationship of associated objects, indicating that there may be three relationships. For example, A and/or B may mean three cases: A alone, A and B both, and B alone. In addition, the character "/" herein generally indicates that associated objects before and after it are in an "or" relationship.

Terms used in the implementation section of the present disclosure are only used to explain specific embodiments of the present disclosure and are not intended to limit the present disclosure. The terms such as "first", "second", "third", and "fourth" in the specification, claims and drawings of the present disclosure are used to distinguish different objects rather than to describe a specific order. In addition, the terms "includes", "comprises", and "have" and any variations thereof, are intended to cover a non-exclusive inclusion.

It should be understood that the "indication" mentioned in the embodiments of the present disclosure may be a direct indication, an indirect indication, or an indication of an associated relationship. For example, A indicates B, which may mean that A directly indicates B, for example, B may be obtained through A; it may also mean that A indirectly indicates B, for example, A indicates C, and B may be obtained through C; and it may also mean that there is an association relationship between A and B.

In the description of the embodiments of the present disclosure, the term "corresponding" may indicate that there is a direct or indirect correspondence between two items, or an association relationship between the two items, or a relationship of indicating and being indicated, configuring and being configured, or the like.

In the embodiments of the present disclosure, "pre-defined" or "pre-configured" may be implemented by pre-saving corresponding codes, tables or other manners that may be used to indicate relevant information in a device (for example, including a terminal device and a network device). The present disclosure does not limit its specific implementation. For example, predefined may refer to that defined in the protocol.

In the embodiments of the present disclosure, the "protocol" may refer to a standard protocol in the communication field, for example, the "protocol" may be an evolution of an existing LTE protocol, an NR protocol, a Wi-Fi protocol, or a protocol related to other communication systems, which will not limited in the present disclosure.

To facilitate understanding of the embodiments of the present disclosure, the AMP device related to the present disclosure will be described.

The AMP device may obtain power from various power sources, including radio frequency (RF) radio, solar power, thermal power, or the like. In all power sources, the RF radio is the most controllable. For power harvesting of the RF radio power, narrow bandwidth S1G signals are more suitable for power harvesting by the AMP device due to their good propagation characteristics.

It should be pointed out that AMP device may also referred as ambient power enabled IoT device (ambient IoT device for short). Specifically, the ambient IoT device refers to an IoT device that uses various ambient powers, such as wireless radio frequency energy, light power, solar power, thermal power, mechanical power, and other ambient powers. The ambient IoT device may not have power storage capability or may have very limited power storage capability (e.g., using a capacitor with a capacity of tens of microfarads (uF)).

In some embodiments, the ambient IoT device may be used in at least following four scenarios:
object recognition, such as management of logistics and production line product, and supply chain management;
environmental monitoring, such as monitoring of temperature, humidity, and harmful gas in working environments and natural environments;
positioning, such as indoor positioning, intelligent object search, and production line item positioning; and
intelligent control, such as intelligent control of various electrical appliances in smart homes (turning air conditioners on and off, adjusting temperature), and intelligent control of various facilities in agricultural greenhouses (automatic irrigation and fertilization).

To facilitate understanding of the embodiments of the present disclosure, a frequency division multiple access (FDMA) mode related to the present disclosure will be described.

In a case where 802.11ba operates at 2.4 GHz, the FDMA mode may be applied to transmit in two channels simultaneously, as illustrated in FIG. 2. With FDMA, multiple wake-up frames may be transmitted on one frequency to address different wake up radio (WUR) devices in different channels. However, only the identity (ID) of the WUR device may be carried in the WUR channel, and the channel bandwidth is not suitable for the AMP device, especially the S1G frequency band.

The present disclosure proposes an FDMA design scheme for the AMP device, which provides FDMA design for uplink (UL) and/or downlink (DL) and S1G 2.4/5GHz AMP devices. Through the FDMA design, the network device (e.g., the AP) may address more AMP devices at the same time, which is necessary when AMP devices are deployed on a large scale, thereby improving the communication performance of the AMP device. In addition, in a case where there is a large amount of data addressing a single AMP device, the FDMA design further allows the AMP device to receive more data carried by multiple channels, so as to improve the communication performance of the AMP device.

To facilitate understanding of the technical solutions in the embodiments of the present disclosure, the technical solutions of the present disclosure will be described in detail below via specific embodiments. The following related technologies may be, as optional solutions, arbitrarily combined with the technical solutions in the embodiments of the present disclosure, and those combined solutions all fall within the protection scope of the embodiments of the present disclosure. The embodiments of the present disclosure include at least part of the following contents.

FIG. 3 is a schematic flowchart of a wireless communication method 200 according to embodiments of the present disclosure. As illustrated in FIG. 3, the wireless communication method 200 may include at least part of the following contents:
S210, negotiating, by an AMP device, first information with a network side; where the first information is used for indicating whether the AMP device supports uplink FDMA and/or downlink FDMA.

In the embodiments of the present disclosure, before performing transmission, the AMP device negotiates with the network side on whether the AMP device supports the uplink FDMA and/or the downlink FDMA, and communication performance of the AMP device may be improved by designing the uplink FDMA and/or the downlink FDMA.

It should be noted that the AMP device has a huge market in multiple scenarios, such as a smart home, a smart manufacturing, logistics/warehouses. The AMP device has opened up a whole new market duo to its ultra-low cost and maintenance-free features. The technical solutions in the present disclosure may be used in a case where cost-effective, maintenance-free and high-accuracy AMP device positioning is required. The embodiments of the present disclosure are involved in a communication system that may be applied to the AMP device, and the AMP device may support the uplink FDMA and/or the downlink FDMA.

In some embodiments, the network side negotiating with the AMP device, that is, the network device, may be one of: an access point (AP), a transmission reception point (TRP), and a base station.

In some embodiments, the embodiments of the present disclosure may be applied to S1G 2.4 GHz or S1G 5 GHz.

In the embodiments of the present disclosure, the AMP device may include a backscatter (BS) transmitter, where backscatter signals transmitted from the backscatter transmitter may be signals on one FDMA channel or signals on multiple FDMA channels.

Example 1, the backscatter transmitter includes a single channel filter. In this case, the backscatter transmitter may only receive and backscatter signals in one FDMA channel.

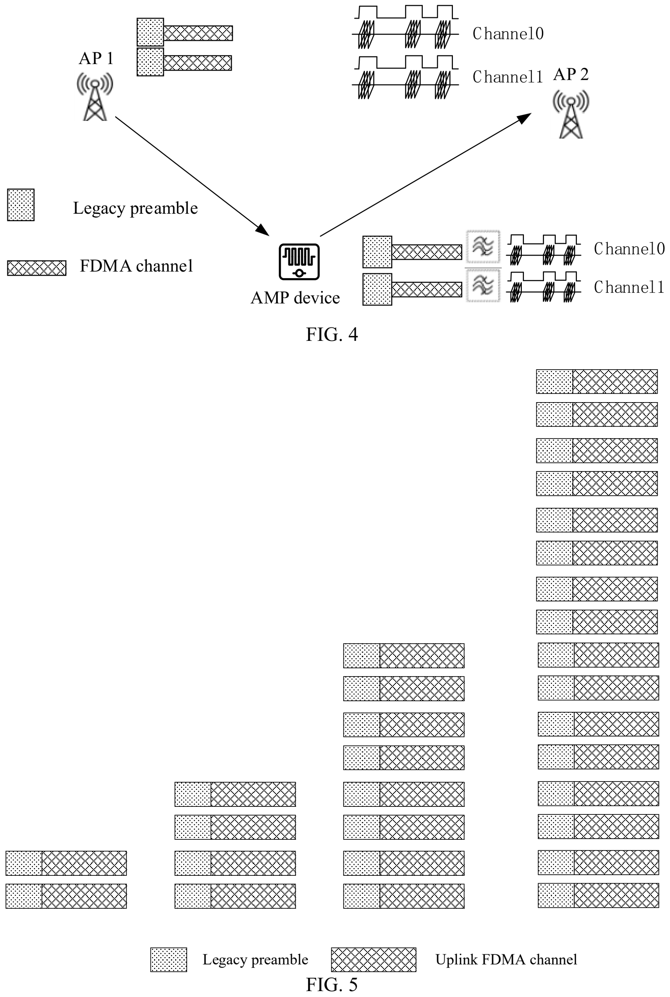

Example 2, the backscatter transmitter includes multiple channel filters. In this case, the backscatter transmitter may receive and backscatter signals in multiple FDMA channels. As illustrated in FIG. 4, an AP 1 performs transmission by using two FDMA channels at the same time, while the backscatter transmitter of the AMP device uses two channel filters to filter out two FDMA channels, and modulates FDMA channel 0 and FDMA channel 1 by using on-off Keying (OOK) modulation manner to obtain two data streams (i.e., two signals), and then the OOK modulated signals are reflected in different FDMA channels and received by an AP 2.

In two examples above, the AMP device needs to indicate to associated APs (e.g., the AP 1 and the AP 2 in FIG. 4) whether the AMP device may support FDMA and how many FDMA channels it may support at most, especially in Example 2. Different backscatter signals transmitted from the AMP device may or may not be frequency shifted, which means that frequency offsets of multiple FDMA channels may be maintained or changed by the AMP device when being reflected. In response to that the frequency offsets change, this kind of information should be indicated to a receiving AP, such as the AP 2 in FIG. 4, before performing backscatter transmission. This kind of frequency shift capability of the AMP device should also be indicated to the associated APs (e.g., the AP 1 and the AP 2 in FIG. 4). It should be noted that FIG. 4 is applied to a bi-static backscattering communication scenario, that is, incoming signals received by the AMP device and backscatter signals transmitted correspond to different devices (i.e., the AP 1 and the AP 2, respectively). Certainly, the embodiments of the present disclosure may also be applied to a mono-static backscattering communication scenario, that is, incoming signals received by the AMP device and backscatter signals transmitted from the AMP device correspond to the same device.

It should be noted that in the embodiments of the present disclosure, a non-AMP device (e.g., the STA) may recognize a legacy preamble, the AMP device may not recognize the legacy preamble, and the AMP device may recognize the FDMA channel following the legacy preamble.

In some embodiments, in a case where the AMP device supports the uplink FDMA and/or the downlink FDMA, the first information includes but is not limited to at least one of:
a maximum number of uplink FDMA channels supported by the AMP device;
a maximum number of downlink FDMA channels supported by the AMP device;
a maximum number of downlink FDMA channels supported by the AMP device in a case where multiple downlink FDMA channels perform addressing;
a maximum frequency offset between multiple uplink FDMA channels supported by the AMP device;
a maximum frequency offset between multiple downlink FDMA channels supported by the AMP device;
a number of uplink FDMA channels;
a number of downlink FDMA channels;
at least one frequency offset between multiple uplink FDMA channels;
at least one frequency offset between multiple downlink FDMA channels;
whether multiple uplink FDMA channels correspond to a same legacy preamble;
whether multiple downlink FDMA channels correspond to a same legacy preamble;
in a case where multiple uplink FDMA channels correspond to a same legacy preamble, a maximum number of uplink FDMA channels within one preamble bandwidth; or
in a case where multiple downlink FDMA channels correspond to a same legacy preamble, a maximum number of downlink FDMA channels within one preamble bandwidth.

Specifically, for example, in a case where the AMP device at least supports the uplink FDMA, the first information includes but is not limited to at least one of:
the maximum number of uplink FDMA channels supported by the AMP device;
the maximum frequency offset between multiple uplink FDMA channels supported by the AMP device;
the number of uplink FDMA channels;
the frequency offset between multiple uplink FDMA channels;
whether multiple uplink FDMA channels correspond to the same legacy preamble; or
in a case where multiple uplink FDMA channels correspond to the same legacy preamble, the maximum number of uplink FDMA channels within one preamble bandwidth.

Specifically, for example, in a case where the AMP device at least supports the downlink FDMA, the first information includes but is not limited to at least one of:
the maximum number of downlink FDMA channels supported by the AMP device;
the maximum number of downlink FDMA channels supported by the AMP device in a case where the multiple downlink FDMA channels perform addressing;
the maximum frequency offset between multiple downlink FDMA channels supported by the AMP device;
the number of downlink FDMA channels;
the frequency offset between multiple downlink FDMA channels;
whether multiple downlink FDMA channels correspond to the same legacy preamble; or
in a case where multiple downlink FDMA channels correspond to the same legacy preamble, the maximum number of downlink FDMA channels within one preamble bandwidth.

In some embodiments, in a case where the AMP device supports the uplink FDMA and/or the downlink FDMA, the AMP device receives second information dynamically configured by the network side (e.g., a network device); where the second information includes but is not limited to at least one of: a number of uplink FDMA channels, a number of downlink FDMA channels, at least one frequency offset between multiple uplink FDMA channels, or at least one frequency offset between multiple downlink FDMA channels. That is, the network device may dynamically configure some FDMA channel parameters during the transmission process.

Specifically, for example, in a case where the AMP device supports the uplink FDMA, the second information includes but is not limited to at least one of: the number of uplink FDMA channels, or the frequency offset between multiple uplink FDMA channels.

Specifically, for example, in a case where the AMP device supports the downlink FDMA, the second information includes but is not limited to at least one of: the number of downlink FDMA channels, or the frequency offset between multiple downlink FDMA channels.

In some embodiments, in a case where the AMP device supports the uplink FDMA, the number of uplink FDMA channels is 2n, where n is a positive integer. For example, in a case where the AMP device supports the uplink FDMA, as illustrated in FIG. 5, the number of uplink FDMA channels is one of: 2, 4, 8, and 16. In FIG. 5, a bandwidth of the uplink FDMA channel is 1 MHz. In the embodiments, the AMP device may transmit more data via up to 16 uplink FDMA channels, or the AMP device may transmit data to more APs.

In some embodiments, in a case where the AMP device supports the uplink FDMA, in response to the bandwidth of the uplink FDMA channel being 1 MHz, 2 MHz, 8 MHz, or 16 MHz, a maximum number of uplink FDMA channels is 16.

In some embodiments, in a case where the AMP device supports the uplink FDMA, in response to the bandwidth of the uplink FDMA channel being 250 kHz, a maximum number of uplink FDMA channels is 20.

Specifically, different maximum numbers of uplink FDMA channels may be applied in different regions/countries. For example, for some regions/countries, the supported bandwidth of the uplink FDMA channel is 1 MHz, 2 MHz, 8 MHz, or 16 MHz, in this case, the maximum number of uplink FDMA channels may be 16. As another example, for some regions/countries, the supported bandwidth of the uplink FDMA channel is 250 kHz, in this case, the maximum number of uplink FDMA channels may be 20.

In some embodiments, in a case where the AMP device supports the uplink FDMA, one uplink FDMA channel corresponds to one network device. That is, different uplink FDMA channels may address different network devices, where the different uplink FDMA channels carry identifiers (IDs) of the different network devices.

In some embodiments, in a case where the AMP device supports the uplink FDMA, multiple uplink FDMA channels correspond to one network device. That is, multiple uplink FDMA channels may address the same network device, so that the AMP device may upload more uplink data to a single network device at once.

In some embodiments, in a case where multiple uplink FDMA channels correspond to one network device, a target uplink FDMA channel among the multiple uplink FDMA channels carries identifier information of the network device corresponding to the multiple uplink FDMA channels. Optionally, the target uplink FDMA channel is a primary uplink FDMA channel among the multiple uplink FDMA channels, or the target uplink FDMA channel is an uplink FDMA channel with a largest index among the multiple uplink FDMA channels or an uplink FDMA channel with a lowest index among the multiple uplink FDMA channels.

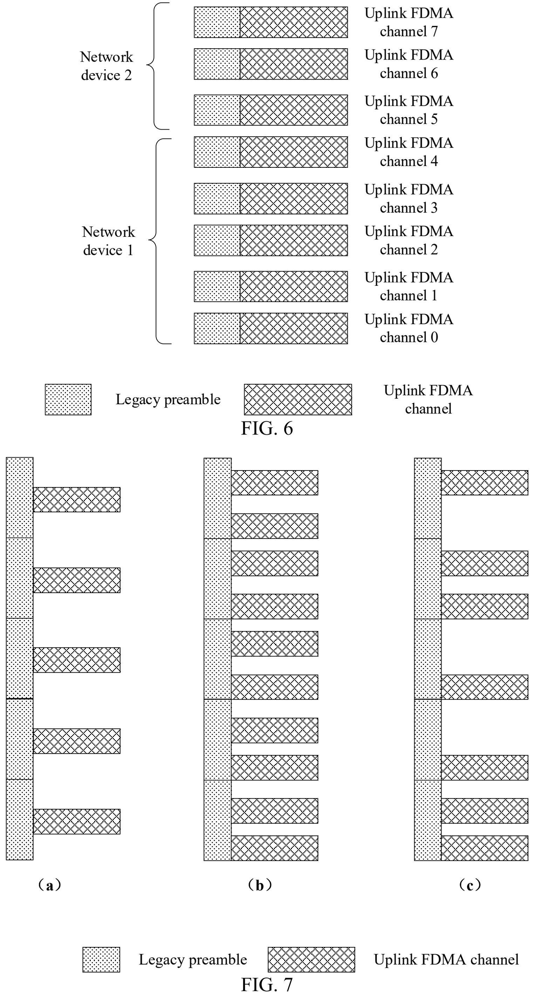

Specifically, for example, as illustrated in FIG. 6, uplink FDMA channels 0-4 are used for a network device 1, and uplink FDMA channels 5-7 are used for a network device 2. IDs of the network device 1 and the network device 2 may be carried in an uplink FDMA channel 0 and an uplink FDMA channel 5, respectively, and data of the network device 1 and the network device 2 may be carried in the uplink FDMA channels 0-4 and the uplink FDMA channels 5-7, respectively.

In some embodiments, in a case where a length of uplink data to be transmitted is fixed and the uplink data to be transmitted does not occupy all uplink FDMA channels among the multiple uplink FDMA channels, a part of the multiple uplink FDMA channels, which are not occupied by the uplink data to be transmitted, are padded with zeros. Certainly, the part of the multiple uplink FDMA channels, which are not occupied by the uplink data to be transmitted, may also be padded with other information, which will not limited in the embodiments of the present disclosure.

In some embodiments, in a case where the AMP device supports the uplink FDMA, a corresponding relationship exists between a legacy preamble and the uplink FDMA channel. Optionally, the corresponding relationship between the legacy preamble and the uplink FDMA channel includes at least one of: one legacy preamble corresponds to one uplink FDMA channel, or one legacy preamble corresponds to multiple uplink FDMA channels.

In some embodiments, a number of uplink FDMA channels corresponding to a single AMP device is determined based on a bandwidth of the legacy preamble, or a number of uplink FDMA channels corresponding to a single AMP device is agreed upon by a protocol, or a number of uplink FDMA channels corresponding to a single AMP device is configured by a network.

In some embodiments, on the frequency bands of 920-925 MHz, a 1 MHz legacy preamble may support up to 5 uplink FDMA channels.

Specifically, for example, one legacy preamble is followed by one narrower uplink FDMA channel, as illustrated in a of FIG. 7.

Specifically, as another example, one legacy preamble is followed by two narrower uplink FDMA channels, and the number of uplink FDMA channels after each legacy preamble is the same, as illustrated in b of FIG. 7. The uplink FDMA channel addressing a single network device may or may not be constrained by the bandwidth of the legacy preamble.

Specifically, as still another example, one legacy preamble is followed by one or two narrower uplink FDMA channels, and a part of legacy preambles are followed by one narrower uplink FDMA channel, and a remaining part of legacy preambles are followed by two narrower uplink FDMA channels. The number of uplink FDMA channels after different legacy preambles may be different, as illustrated in c of FIG. 7. The uplink FDMA channel addressing a single network device may or may not be constrained by the bandwidth of the legacy preamble.

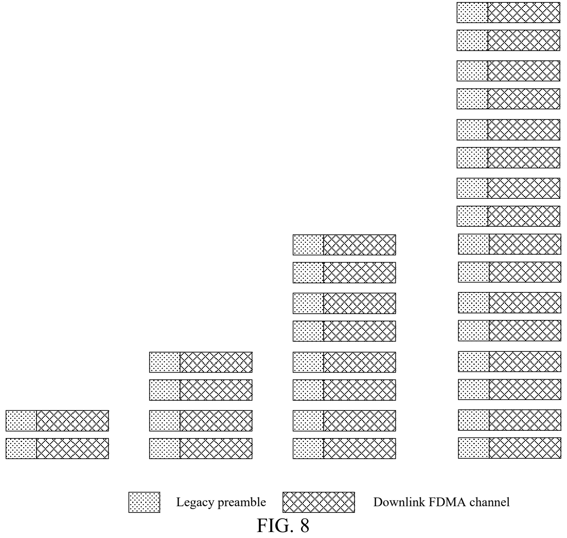

In some embodiments, in a case where the AMP device supports the downlink FDMA, the number of downlink FDMA channels is 2m, where m is a positive integer. For example, in a case where the AMP device supports the downlink FDMA, as illustrated in FIG. 8, the number of downlink FDMA channels is one of: 2, 4, 8, and 16. In FIG. 8, a bandwidth of the downlink FDMA channel is 1 MHz. In the embodiments, with up to 16 downlink FDMA channels, much more AMP devices may be addressed, or the network device may transmit more data to the AMP device.

In some embodiments, in a case where the AMP device supports the downlink FDMA, in response to the bandwidth of the downlink FDMA channel being 1 MHz, 2 MHz, 8 MHz, or 16 MHz, a maximum number of downlink FDMA channels is 16.

In some embodiments, in a case where the AMP device supports the downlink FDMA, in response to the bandwidth of the downlink FDMA channel being 250 kHz, a maximum number of downlink FDMA channels is 20.

Specifically, different maximum numbers of downlink FDMA channels may be applied in different regions/countries. For example, for some regions/countries, the supported bandwidth of the downlink FDMA channel is 1 MHz, 2 MHz, 8 MHz, or 16 MHz, in this case, the maximum number of downlink FDMA channels may be 16. As another example, for some regions/countries, the supported bandwidth of the downlink FDMA channel is 250 kHz, in this case, the maximum number of downlink FDMA channels may be 20.

In some embodiments, in a case where the AMP device supports the downlink FDMA, one downlink FDMA channel corresponds to one AMP device. That is, different downlink FDMA channels may address different AMP devices, where different downlink FDMA channels carry identifiers (IDs) of different AMP devices.

In some embodiments, in a case where the AMP device supports the downlink FDMA, multiple downlink FDMA channels correspond to one AMP device. That is, multiple downlink FDMA channels may address the same AMP device, so that the network device (e.g., the AP) may transmit more downlink data to a single AMP device at once. In other words, the network device (e.g., the APs) may address more AMP devices at the same time, which is necessary when AMP devices are deployed on a large scale. In addition, in a case where there is a large amount of data addressing a single AMP device, the FDMA design further allows the AMP device to receive more data carried by multiple downlink FDMA channels.

In some embodiments, in a case where multiple downlink FDMA channels correspond to one AMP device, a target downlink FDMA channel among the multiple downlink FDMA channels carries identifier information of the AMP device corresponding to the multiple downlink FDMA channels. Optionally, the target downlink FDMA channel is a primary downlink FDMA channel among the multiple downlink FDMA channels, or the target downlink FDMA channel is a downlink FDMA channel with a largest index among the multiple downlink FDMA channels or a downlink FDMA channel with a lowest index among the multiple downlink FDMA channels.

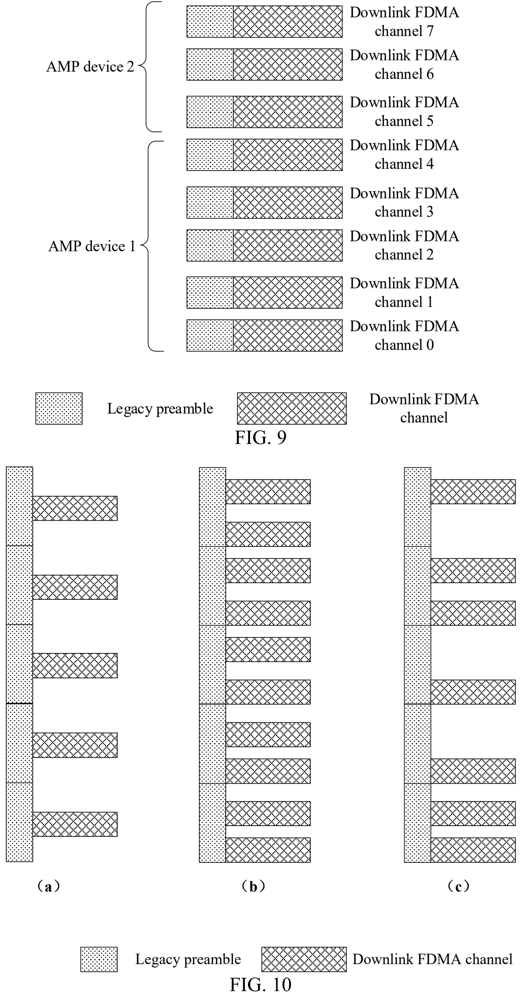

Specifically, for example, as illustrated in FIG. 9, downlink FDMA channels 0-4 are used for an AMP device 1, and downlink FDMA channels 5-7 are used for an AMP device 2. IDs of the AMP device 1 and the AMP device 2 may be carried in a downlink FDMA channel 0 and a downlink FDMA channel 5, respectively, and data of the AMP device 1 and the AMP device 2 may be carried in the downlink FDMA channels 0-4 and the downlink FDMA channels 5-7, respectively.

In some embodiments, in a case where a length of downlink data to be transmitted is fixed and the downlink data to be transmitted does not occupy all downlink FDMA channels among the multiple downlink FDMA channels, a part of the multiple downlink FDMA channels, which are not occupied by the downlink data to be transmitted, are padded with zeros. Certainly, the part of the multiple downlink FDMA channels, which are not occupied by the downlink data to be transmitted, may also be padded with other information, which will not limited in the embodiments of the present disclosure.

In some embodiments, in a case where the AMP device supports the downlink FDMA, a corresponding relationship exists between a legacy preamble and the downlink FDMA channel. Optionally, the corresponding relationship between the legacy preamble and the downlink FDMA channel includes at least one of: one legacy preamble corresponds to one downlink FDMA channel, or one legacy preamble corresponds to multiple downlink FDMA channels.

In some embodiments, a number of downlink FDMA channels corresponding to a single AMP device is determined based on a bandwidth of the legacy preamble, or a number of downlink FDMA channels corresponding to a single AMP device is agreed upon by a protocol, or a number of downlink FDMA channels corresponding to a single AMP device is configured by a network.

In some embodiments, on the frequency bands of 920-925 MHz, a 1 MHz legacy preamble may support up to 5 downlink FDMA channels.

Specifically, for example, one legacy preamble is followed by one narrower downlink FDMA channel, as illustrated in a of FIG. 10.

Specifically, as another example, one legacy preamble is followed by two narrower downlink FDMA channels, and the number of downlink FDMA channels after each legacy preamble is the same, as illustrated in b of FIG. 10. The downlink FDMA channel addressing a single AMP device may or may not be constrained by the bandwidth of the legacy preamble.

Specifically, as still another example, one legacy preamble is followed by one or two narrower downlink FDMA channels, and a part of legacy preambles are followed by one narrower downlink FDMA channel, and a remaining part of legacy preambles are followed by two narrower downlink FDMA channels. The number of downlink FDMA channels after different legacy preambles may be different, as illustrated in c in FIG. 10. The downlink FDMA channel addressing a single AMP device may or may not be constrained by the bandwidth of the legacy preamble.

Therefore, in the embodiments of the present disclosure, before performing transmission, the AMP device negotiates with the network side on whether the AMP device supports the uplink FDMA and/or the downlink FDMA, and communication performance of the AMP device may be improved by designing the uplink FDMA and/or the downlink FDMA.

Specifically, in a case where the AMP device supports the downlink FDMA, the network device (e.g., the AP) may address more AMP devices at the same time, which is necessary when AMP devices are deployed on a large scale. In addition, in a case where there is a large amount of data addressing a single AMP device, the FDMA further be designed to allow the AMP device to receive more data carried by multiple channels.

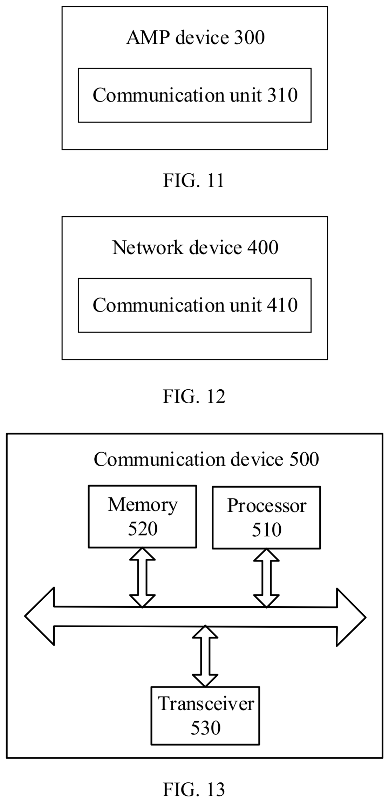

In conjunction with FIGS. 3 to 10, the method embodiments of the present disclosure are described in detail above, and the apparatus embodiments of the present disclosure will be described in detail below in conjunction with FIGS. 11 to 15. It should be understood that the apparatus embodiments and the method embodiments correspond to each other, and similar descriptions may refer to that of the method embodiments.

FIG. 11 illustrates a schematic block diagram of an AMP device 300 according to embodiments of the present disclosure. As illustrated in FIG. 11, the AMP device 300 includes:
a communication unit 310, configured to negotiate first information with a network side; where the first information is used for indicating whether the AMP device supports uplink frequency division multiple access (FDMA) and/or downlink FDMA.

In some embodiments, in a case where the AMP device supports the uplink FDMA and/or the downlink FDMA, the first information includes at least one of:
a maximum number of uplink FDMA channels supported by the AMP device;
a maximum number of downlink FDMA channels supported by the AMP device;
a maximum number of downlink FDMA channels supported by the AMP device in a case where multiple downlink FDMA channels perform addressing;
a maximum frequency offset between multiple uplink FDMA channels supported by the AMP device;
a maximum frequency offset between multiple downlink FDMA channels supported by the AMP device;
a number of uplink FDMA channels;
a number of downlink FDMA channels;
at least one frequency offset between multiple uplink FDMA channels;
at least one frequency offset between multiple downlink FDMA channels;
whether multiple uplink FDMA channels correspond to a same legacy preamble;
whether multiple downlink FDMA channels correspond to a same legacy preamble;
in a case where multiple uplink FDMA channels correspond to a same legacy preamble, a maximum number of uplink FDMA channels within one preamble bandwidth; or
in a case where multiple downlink FDMA channels correspond to a same legacy preamble, a maximum number of downlink FDMA channels within one preamble bandwidth.

In some embodiments, in a case where the AMP device supports the uplink FDMA and/or the downlink FDMA, the communication unit 310 is further configured to receive second information dynamically configured by the network side;
where the second information includes at least one of: a number of uplink FDMA channels, a number of downlink FDMA channels, at least one frequency offset between multiple uplink FDMA channels, or at least one frequency offset between multiple downlink FDMA channels.

In some embodiments, in a case where the AMP device supports the uplink FDMA, a number of uplink FDMA channels is 2n; and/or in a case where the AMP device supports the downlink FDMA, a number of downlink FDMA channels is 2m;
where n and m are both positive integers.

In some embodiments, in the case where the AMP device supports the uplink FDMA, in response to a bandwidth of the uplink FDMA channel being 1 MHz, 2 MHz, 8 MHz, or 16 MHz, a maximum number of the uplink FDMA channels is 16; and/or in response to a bandwidth of the uplink FDMA channel being 250 kHz, a maximum number of the uplink FDMA channels is 20; and/or
in the case where the AMP device supports the downlink FDMA, in response to a bandwidth of the downlink FDMA channel being 1 MHz, 2 MHz, 8 MHz, or 16 MHz, a maximum number of the downlink FDMA channels is 16; and/or in response to a bandwidth of the downlink FDMA channel being 250 kHz, a maximum number of the downlink FDMA channels is 20.

In some embodiments, in a case where the AMP device supports the uplink FDMA, one uplink FDMA channel corresponds to one network device, or multiple uplink FDMA channels correspond to one network device; and/or
in a case where the AMP device supports the downlink FDMA, one downlink FDMA channel corresponds to one AMP device, or multiple downlink FDMA channels correspond to one AMP device.

In some embodiments, in a case where multiple uplink FDMA channels correspond to one network device, a target uplink FDMA channel among the multiple uplink FDMA channels carries identifier information of the network device corresponding to the multiple uplink FDMA channels.

In some embodiments, the target uplink FDMA channel is a primary uplink FDMA channel among the multiple uplink FDMA channels, or the target uplink FDMA channel is an uplink FDMA channel with a largest index among the multiple uplink FDMA channels or an uplink FDMA channel with a lowest index among the multiple uplink FDMA channels.

In some embodiments, in a case where a length of uplink data to be transmitted is fixed and the uplink data to be transmitted does not occupy all uplink FDMA channels among the multiple uplink FDMA channels, a part of the multiple uplink FDMA channels, which are not occupied by the uplink data to be transmitted, are padded with zeros.

In some embodiments, in a case where multiple downlink FDMA channels correspond to one AMP device, a target downlink FDMA channel among the multiple downlink FDMA channels carries identifier information of the AMP device corresponding to the multiple downlink FDMA channels.

In some embodiments, the target downlink FDMA channel is a primary downlink FDMA channel among the multiple downlink FDMA channels, or the target downlink FDMA channel is a downlink FDMA channel with a largest index among the multiple downlink FDMA channels or a downlink FDMA channel with a lowest index among the multiple downlink FDMA channels.

In some embodiments, in a case where a length of downlink data to be transmitted is fixed and the downlink data to be transmitted does not occupy all downlink FDMA channels among the multiple downlink FDMA channels, a part of the multiple downlink FDMA channels, which are not occupied by the downlink data to be transmitted, are padded with zeros.

In some embodiments, in a case where the AMP device supports the uplink FDMA, a corresponding relationship exists between a legacy preamble and the uplink FDMA channel; and/or in a case where the AMP device supports the downlink FDMA, a corresponding relationship exists between a legacy preamble and the downlink FDMA channel.

In some embodiments, the corresponding relationship between the legacy preamble and the uplink FDMA channel includes at least one of:
one legacy preamble corresponds to one uplink FDMA channel, or one legacy preamble corresponds to multiple uplink FDMA channels.

In some embodiments, a number of uplink FDMA channels corresponding to a single AMP device is determined based on a bandwidth of the legacy preamble, or a number of uplink FDMA channels corresponding to a single AMP device is agreed upon by a protocol, or a number of uplink FDMA channels corresponding to a single AMP device is configured by a network.

In some embodiments, the corresponding relationship between the legacy preamble and the downlink FDMA channel includes at least one of:
one legacy preamble corresponds to one downlink FDMA channel, or one legacy preamble corresponds to multiple downlink FDMA channels.

In some embodiments, a number of downlink FDMA channels corresponding to a single AMP device is determined based on a bandwidth of the legacy preamble, or a number of downlink FDMA channels corresponding to a single AMP device is agreed upon by a protocol, or a number of downlink FDMA channels corresponding to a single AMP device is configured by a network.

In some embodiments, the communication unit mentioned above may be a communication interface or a transceiver, or may be an input/output interface of a communication chip or a system on chip. The processing unit mentioned above may be one or more processors.

It should be understood that the AMP device 300 according to the embodiments of the present disclosure may correspond to the AMP device in the method embodiments of the present disclosure, and the above and other operations and/or functions of various units in the AMP device 300 are respectively for implementing the corresponding processes of the AMP device in the method 200 illustrated in FIG. 3, which will not be repeated here for the sake of brevity.

FIG. 12 illustrates a schematic block diagram of a network device 400 according to embodiments of the present disclosure. As illustrated in FIG. 12, the network device 400 includes:
a communication unit 410, configured to negotiate first information with an ambient power (AMP) device; where the first information is used for indicating whether the AMP device supports uplink frequency division multiple access (FDMA) and/or downlink FDMA.

In some embodiments, in a case where the AMP device supports the uplink FDMA and/or the downlink FDMA, the first information includes at least one of:
a maximum number of uplink FDMA channels supported by the AMP device;
a maximum number of downlink FDMA channels supported by the AMP device;
a maximum number of downlink FDMA channels supported by the AMP device in a case where multiple downlink FDMA channels perform addressing;
a maximum frequency offset between multiple uplink FDMA channels supported by the AMP device;
a maximum frequency offset between multiple downlink FDMA channels supported by the AMP device;
a number of uplink FDMA channels;
a number of downlink FDMA channels;
at least one frequency offset between multiple uplink FDMA channels;
at least one frequency offset between multiple downlink FDMA channels;
whether multiple uplink FDMA channels correspond to a same legacy preamble;
whether multiple downlink FDMA channels correspond to a same legacy preamble;
in a case where multiple uplink FDMA channels correspond to a same legacy preamble, a maximum number of uplink FDMA channels within one preamble bandwidth; or
in a case where multiple downlink FDMA channels correspond to a same legacy preamble, a maximum number of downlink FDMA channels within one preamble bandwidth.

In some embodiments, in a case where the AMP device supports the uplink FDMA and/or the downlink FDMA, the communication unit 410 is further configured to dynamically configure second information for the AMP device;
where the second information includes at least one of: a number of uplink FDMA channels, a number of downlink FDMA channels, at least one frequency offset between multiple uplink FDMA channels, or at least one frequency offset between multiple downlink FDMA channels.

In some embodiments, in a case where the AMP device supports the uplink FDMA, a number of uplink FDMA channels is 2n; and/or in a case where the AMP device supports the downlink FDMA, a number of downlink FDMA channels is 2m;
where n and m are both positive integers.

In some embodiments, in the case where the AMP device supports the uplink FDMA, in response to a bandwidth of the uplink FDMA channel being 1 MHz, 2 MHz, 8 MHz, or 16 MHz, a maximum number of the uplink FDMA channels is 16; and/or in response to a bandwidth of the uplink FDMA channel being 250 kHz, a maximum number of the uplink FDMA channels is 20; and/or
in the case where the AMP device supports the downlink FDMA, in response to a bandwidth of the downlink FDMA channel being 1 MHz, 2 MHz, 8 MHz, or 16 MHz, a maximum number of the downlink FDMA channels is 16; and/or in response to a bandwidth of the downlink FDMA channel being 250 kHz, a maximum number of the downlink FDMA channels is 20.

In some embodiments, in a case where the AMP device supports the uplink FDMA, one uplink FDMA channel corresponds to one network device, or multiple uplink FDMA channels correspond to one network device; and/or
in a case where the AMP device supports the downlink FDMA, one downlink FDMA channel corresponds to one AMP device, or multiple downlink FDMA channels correspond to one AMP device.

In some embodiments, in a case where multiple uplink FDMA channels correspond to one network device, a target uplink FDMA channel among the multiple uplink FDMA channels carries identifier information of the network device corresponding to the multiple uplink FDMA channels.

In some embodiments, the target uplink FDMA channel is a primary uplink FDMA channel among the multiple uplink FDMA channels, or the target uplink FDMA channel is an uplink FDMA channel with a largest index among the multiple uplink FDMA channels or an uplink FDMA channel with a lowest index among the multiple uplink FDMA channels.

In some embodiments, in a case where a length of uplink data to be transmitted is fixed and the uplink data to be transmitted does not occupy all uplink FDMA channels among the multiple uplink FDMA channels, a part of the multiple uplink FDMA channels, which are not occupied by the uplink data to be transmitted, are padded with zeros.

In some embodiments, in a case where the multiple downlink FDMA channels correspond to one AMP device, a target downlink FDMA channel among the multiple downlink FDMA channels carries identifier information of the AMP device corresponding to the multiple downlink FDMA channels.

In some embodiments, the target downlink FDMA channel is a primary downlink FDMA channel among the multiple downlink FDMA channels, or the target downlink FDMA channel is a downlink FDMA channel with a largest index among the multiple downlink FDMA channels or a downlink FDMA channel with a lowest index among the multiple downlink FDMA channels.

In some embodiments, in a case where a length of downlink data to be transmitted is fixed and the downlink data to be transmitted does not occupy all downlink FDMA channels among the multiple downlink FDMA channels, a part of the multiple downlink FDMA channels, which are not occupied by the downlink data to be transmitted, are padded with zeros.

In some embodiments, in a case where the AMP device supports the uplink FDMA, a corresponding relationship exists between a legacy preamble and the uplink FDMA channel; and/or in a case where the AMP device supports the downlink FDMA, a corresponding relationship exists between a legacy preamble and the downlink FDMA channel.

In some embodiments, the corresponding relationship between the legacy preamble and the uplink FDMA channel includes at least one of:
one legacy preamble corresponds to one uplink FDMA channel, or one legacy preamble corresponds to multiple uplink FDMA channels.

In some embodiments, a number of uplink FDMA channels corresponding to a single AMP device is determined based on a bandwidth of the legacy preamble, or a number of uplink FDMA channels corresponding to a single AMP device is agreed upon by a protocol, or a number of uplink FDMA channels corresponding to a single AMP device is configured by a network.

In some embodiments, the corresponding relationship between the legacy preamble and the downlink FDMA channel includes at least one of:
one legacy preamble corresponds to one downlink FDMA channel, or one legacy preamble corresponds to multiple downlink FDMA channels.

In some embodiments, a number of downlink FDMA channels corresponding to a single AMP device is determined based on a bandwidth of the legacy preamble, or a number of downlink FDMA channels corresponding to a single AMP device is agreed upon by a protocol, or a number of downlink FDMA channels corresponding to a single AMP device is configured by a network.

In some embodiments, the network device is one of: an access point (AP), a transmission reception access point (TRP), and a base station.

In some embodiments, the communication unit mentioned above may be a communication interface or a transceiver, or may be an input/output interface of a communication chip or a system on chip. The processing unit mentioned above may be one or more processors.

It should be understood that the network device 400 according to the embodiments of the present disclosure may correspond to the network device in the embodiments of the method of the present disclosure, and the above and other operations and/or functions of various units in the network device 400 are respectively for implementing the corresponding processes of the network device in the method 200 illustrated in FIG. 3, which will not be repeated here for the sake of brevity.

FIG. 13 is a schematic structural diagram of a communication device 500 provided in embodiments of the present disclosure. The communication device 500 illustrated in FIG. 13 includes a processor 510, and the processor 510 may call a computer program from a memory and run the computer program, to implement the method in the embodiments of the present disclosure.

In some embodiments, as illustrated in FIG. 13, the communication device 500 may further include a memory 520. The processor 510 may call a computer program from the memory 520 and run the computer program, to implement the method in the embodiments of the present disclosure.

The memory 520 may be a separate device independent of the processor 510, or may be integrated into the processor 510.

In some embodiments, as illustrated in FIG. 13, the communication device 500 may further include a transceiver 530, and the processor 510 may control the transceiver 530 to communicate with other devices, specifically, may transmit information or data to other devices, or receive information or data transmitted from other devices.

The transceiver 530 may include a transmitter and a receiver. The transceiver 530 may further include antenna(s), and the number of the antenna(s) may be one or more.

In some embodiments, the processor 510 may implement functions of a processing unit in the AMP device, or the processor 510 may implement functions of a processing unit in the network device, which will not be repeated here for the sake of brevity.

In some embodiments, the transceiver 530 may implement functions of the communication unit in the AMP device, which will not be repeated here for the sake of brevity.

In some embodiments, the transceiver 530 may implement functions of the communication unit in the network device, which will not be repeated here for the sake of brevity.

In some embodiments, the communication device 500 may specifically be the network device in the embodiments of the present disclosure, and the communication device 500 may implement corresponding processes implemented by the network device in various methods in the embodiment of the present disclosure, which will not be repeated here for the sake of brevity.

In some embodiments, the communication device 500 may specifically be the AMP device in the embodiments of the present disclosure, and the communication device 500 may implement corresponding processes implemented by the AMP device in various methods in the embodiments of the present disclosure, which will not be repeated here for the sake of brevity.

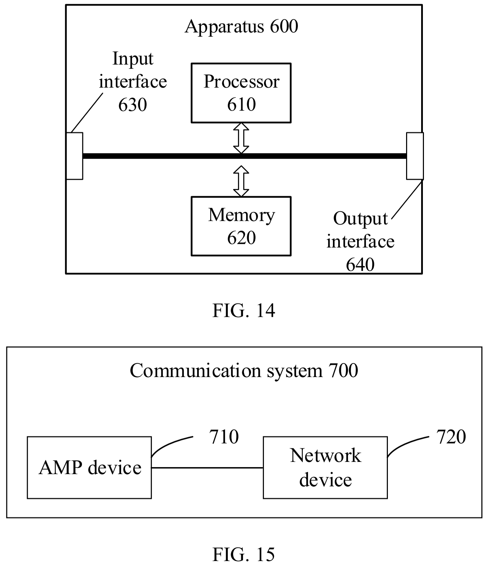

FIG. 14 is a schematic structural diagram of an apparatus in embodiments of the present disclosure. The apparatus 600 illustrated in FIG. 14 includes a processor 610, and the processor 610 may call a computer program from a memory and run the computer program, to implement the methods in the embodiments of the present disclosure.

In some embodiments, as illustrated in FIG. 14, the apparatus 600 may further include a memory 620. The processor 610 may call a computer program from the memory 620 and run the computer program, to implement the methods in the embodiments of the present disclosure.

The memory 620 may be a separate device independent from the processor 610, or may be integrated into the processor 610.

In some embodiments, the processor 610 may implement functions of a processing unit in the AMP device, or the processor 610 may implement functions of a processing unit in the network device, which will not be repeated here for the sake of brevity.

In some embodiments, the apparatus 600 may further include an input interface 630. The processor 610 may control the input interface 630 to communicate with other devices or chips, and specifically, may obtain information or data transmitted from other devices or chips. Optionally, the processor 610 may be located inside or outside a chip.

In some embodiments, the input interface 630 may implement functions of the communication unit in the AMP device, or the input interface 630 may implement functions of the communication unit in the network device.

In some embodiments, the apparatus 600 may further include an output interface 640. The processor 610 may control the output interface 640 to communicate with other devices or chips, and specifically, may output information or data to other devices or chips. Optionally, the processor 610 may be located inside or outside a chip.

In some embodiments, the output interface 640 may implement functions of the communication unit in the AMP device, or the output interface 640 may implement functions of the communication unit in the network device.

In some embodiments, the apparatus may be applied to the network device in the embodiments of the present disclosure, and the apparatus may implement corresponding processes implemented by the network device in various methods in the embodiments of the present disclosure, which will not be repeated here for the sake of brevity.

In some embodiments, the apparatus may be applied to the AMP device in the embodiments of the present disclosure, and the apparatus may implement corresponding processes implemented by the AMP device in various methods in the embodiments of the present disclosure, which will not be repeated here for the sake of brevity.

In some embodiments, the apparatus mentioned in the embodiments of the present disclosure may also be a chip. For example, the chip may be a system-on-chip, a system chip, a chip system, or a system-on-chip chip.

FIG. 15 is a schematic block diagram of a communication system 700 provided in embodiments of the present disclosure. As illustrated in FIG. 15, the communication system 700 includes an AMP device 710 and a network device 720.

The AMP device 710 may be configured to implement the corresponding functions implemented by the AMP device in the above methods, and the network device 720 may be configured to implement the corresponding functions implemented by the network device in the above methods, which will not be repeated here for the sake of brevity.

It should be understood that the processor in the embodiments of the present disclosure may be an integrated circuit chip with a capability for processing signals. In an implementation process, various steps of the method embodiments described above may be completed through an integrated logic circuit of hardware in the processor or instructions in a form of software. The above processor may be a general-purpose processor, a digital signal processor (DSP), an application specific integrated circuit (ASIC), a field programmable gate array (FPGA) or another programmable logic device, a discrete gate or transistor logic devices, or discrete hardware components. The processor may implement or perform various methods, steps, and logic block diagrams disclosed in the embodiments of the present disclosure. The general-purpose processor may be a microprocessor, or the processor may be any conventional processor or the like. The steps of the methods disclosed in combination with the embodiments of the present disclosure may be directly embodied by execution of a hardware decoding processor, or by execution of a combination of hardware and software modules in a decoding processor. The software module may be located in the mature storage medium in the art, such as a random access memory, a flash memory, a read-only memory, a programmable read-only memory, or an electrically erasable programmable memory, or a register. The storage medium is located in a memory, and the processor reads information in the memory and completes the steps of the above methods in combination with hardware of the processor.

It will be appreciated that the memory in the embodiments of the present disclosure may be a volatile (transitory) memory or a non-volatile (non-transitory) memory, or may include both volatile and non-volatile memories. The non-volatile memory may be a read-only memory (ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (RAM), which is used as an external cache. As an example but not limitation, a variety of forms of RAMs are available, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct memory bus random access memory (direct rambus RAM, DR RAM). It should be noted that the memories in the systems and methods described herein are intended to include, but are not limited to, these and any other suitable types of memories.

It should be understood that the above memories are exemplary but are not limited illustration. For example, the memory in the embodiments of the present disclosure may also be a static random access memory (static RAM, SRAM), a dynamic random access memory (dynamic RAM, DRAM), a synchronous dynamic random access memory (synchronous DRAM, SDRAM)), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), or a direct memory bus random access memory (direct rambus RAM, DR RAM). That is, the memories in the embodiments of the present disclosure are intended to include, but are not limited to, these and any other suitable types of memories.

Embodiments of the present disclosure further provide a computer-readable storage medium for storing a computer program.

In some embodiments, the computer-readable storage medium may be applied to the network device in the embodiments of the present disclosure, and the computer program enables a computer to perform the corresponding processes implemented by the network device in the various methods in the embodiments of the present disclosure, which will not be repeated here for the sake of brevity.

In some embodiments, the computer-readable storage medium may be applied to the AMP device in the embodiments of the present disclosure, and the computer program enables a computer to perform the corresponding processes implemented by the AMP device in the various methods of the embodiments of the present disclosure, which will not be repeated here for the sake of brevity.

Embodiments of the present disclosure further provide a computer program product, which includes computer program instructions.

In some embodiments, the computer program product may be applied to the network device in the embodiments of the present disclosure, and the computer program instructions enable a computer to perform the corresponding processes implemented by the network device in the various methods of the embodiments of the present disclosure, which will not be repeated here for the sake of brevity.

In some embodiments, the computer program product may be applied to the AMP device in the embodiments of the present disclosure, and the computer program instructions enable a computer to perform the corresponding processes implemented by the AMP device in the various methods of the embodiments of the present disclosure, which will not be repeated here for the sake of brevity.

Embodiments of the present disclosure further provide a computer program.

In some embodiments, the computer program may be applied to the network device in the embodiments of the present disclosure. The computer program, when run on a computer, enables the computer to perform the corresponding processes implemented by the network device in the various methods of the embodiments of the present disclosure, which will not be repeated here for the sake of brevity.

In some embodiments, the computer program may be applied to the AMP device in the embodiments of the present disclosure. The computer program, when run on a computer, enables the computer to perform the corresponding processes implemented by the AMP device in the various methods of the embodiments of the present disclosure, which will not be repeated here for the sake of brevity.

Those of ordinary skills in the art will appreciate that the units and algorithm steps of various examples described in conjunction with the embodiments disclosed herein may be implemented in electronic hardware, or in a combination of computer software and electronic hardware. Whether these functions are performed in a form of hardware or software depends on a specific application and design constraints of a technical solution. Those skilled in the art may use different methods to implement the described functions for each specific application, but such implementation should not be considered to be beyond the scope of the present disclosure.

It may be clearly understood by those skilled in the art that, for convenience and brevity of the description, specific operating processes of the system, apparatuses and units described above may refer to the corresponding processes in the above method embodiments, which will not be repeated here.

In several embodiments provided in the present disclosure, it should be understood that the disclosed systems, apparatuses, and methods may be implemented in other ways. For example, the apparatus embodiments described above are only schematic. For example, the division of the units is only division of logical functions, and there may be other division ways in actual implementation. For example, a plurality of units or components may be combined or integrated into another system, or some features may be ignored or not performed. In addition, coupling or direct coupling or communication connection between each other, which is illustrated or discussed, may be indirect coupling or communication connection via some interfaces, apparatuses or units, and may be electrical, mechanical, or in other forms.

The units described as separate components may be or may not be physically separated, and the components shown as units may be or may not be physical units, that is, they may be located at one place, or may be distributed onto a plurality network units. Some or all of the units may be selected according to actual needs to implement the purpose of the solution of the embodiments.

In addition, various functional units in various embodiments of the present disclosure may be integrated into one processing unit, or various units may exist physically alone, or two or more units may be integrated into one unit.

If being implemented in the form of a software functional unit and sold or used as an independent product, the functions may be stored in a computer-readable storage medium. Based on such an understanding, the technical solution of the present disclosure, in essence or a part of the technical solutions that contribute to a prior art or a part of the technical solutions, may be embodied in the form of a software product, and the computer software product is stored in a storage medium and includes several instructions for enabling a computer device (which may be a personal computer, a server, a network device, or the like) to perform all or a part of the steps of the methods described in various embodiments of the present disclosure. The aforementioned storage media includes a USB flash drive (U disk), a mobile hard disk, a read-only memory (ROM), a random access memory (RAM), a disk, an optical disk, and other mediums capable of storing program codes.

The foregoing descriptions are merely specific implementations of the present disclosure, but the protection scope of the present disclosure is not limited thereto. Variations or replacements that any person skilled in the art could readily conceive of within the technical scope disclosed in the present disclosure shall be included in the protection scope of the present disclosure. Therefore, the protection scope of the present disclosure shall be subject to the protection scope of claims.

## Claims

1. A wireless communication method, comprising:
negotiating, by an ambient power, AMP, device, first information with a network side; wherein the first information is used for indicating whether the AMP device supports uplink frequency division multiple access, FDMA, and/or downlink FDMA.

2. The method according to claim 1, wherein in a case where the AMP device supports the uplink FDMA and/or the downlink FDMA, the first information comprises at least one of:
a maximum number of uplink FDMA channels supported by the AMP device;
a maximum number of downlink FDMA channels supported by the AMP device;
a maximum number of downlink FDMA channels supported by the AMP device in a case where multiple downlink FDMA channels perform addressing;
a maximum frequency offset between multiple uplink FDMA channels supported by the AMP device;
a maximum frequency offset between multiple downlink FDMA channels supported by the AMP device;
a number of uplink FDMA channels;
a number of downlink FDMA channels;
at least one frequency offset between multiple uplink FDMA channels;
at least one frequency offset between multiple downlink FDMA channels;
whether multiple uplink FDMA channels correspond to a same legacy preamble;
whether multiple downlink FDMA channels correspond to a same legacy preamble;
in a case where multiple uplink FDMA channels correspond to a same legacy preamble, a maximum number of uplink FDMA channels within one preamble bandwidth; or
in a case where multiple downlink FDMA channels correspond to a same legacy preamble, a maximum number of downlink FDMA channels within one preamble bandwidth.

3. The method according to claim 1 or 2, wherein
in a case where the AMP device supports the uplink FDMA and/or the downlink FDMA, the method further comprises:
receiving, by the AMP device, second information dynamically configured by the network side;
wherein the second information comprises at least one of: a number of uplink FDMA channels, a number of downlink FDMA channels, at least one frequency offset between multiple uplink FDMA channels, or at least one frequency offset between multiple downlink FDMA channels.

4. The method according to any one of claims 1 to 3, wherein
in a case where the AMP device supports the uplink FDMA, a number of uplink FDMA channels is 2n; and/or
in a case where the AMP device supports the downlink FDMA, a number of downlink FDMA channels is 2m;
wherein n and m are both positive integers.

5. The method according to claim 4, wherein
in the case where the AMP device supports the uplink FDMA, in response to a bandwidth of the uplink FDMA channel being 1 MHz, 2 MHz, 8 MHz, or 16 MHz, a maximum number of the uplink FDMA channels is 16; and/or in response to a bandwidth of the uplink FDMA channel being 250 kHz, a maximum number of the uplink FDMA channels is 20; and/or
in the case where the AMP device supports the downlink FDMA, in response to a bandwidth of the downlink FDMA channel being 1 MHz, 2 MHz, 8 MHz, or 16 MHz, a maximum number of the downlink FDMA channels is 16; and/or in response to a bandwidth of the downlink FDMA channel being 250 kHz, a maximum number of the downlink FDMA channels is 20.

6. The method according to any one of claims 1 to 5, wherein
in a case where the AMP device supports the uplink FDMA, one uplink FDMA channel corresponds to one network device, or multiple uplink FDMA channels correspond to one network device; and/or
in a case where the AMP device supports the downlink FDMA, one downlink FDMA channel corresponds to one AMP device, or multiple downlink FDMA channels correspond to one AMP device.

7. The method according to claim 6, wherein
in a case where the multiple uplink FDMA channels correspond to the one network device, a target uplink FDMA channel among the multiple uplink FDMA channels carries identifier information of the network device corresponding to the multiple uplink FDMA channels.

8. The method according to claim 7, wherein
the target uplink FDMA channel is a primary uplink FDMA channel among the multiple uplink FDMA channels, or the target uplink FDMA channel is an uplink FDMA channel with a largest index among the multiple uplink FDMA channels or an uplink FDMA channel with a lowest index among the multiple uplink FDMA channels.

9. The method according to claim 7 or 8, wherein
in a case where a length of uplink data to be transmitted is fixed and the uplink data to be transmitted does not occupy all uplink FDMA channels among the multiple uplink FDMA channels, a part of the multiple uplink FDMA channels, which are not occupied by the uplink data to be transmitted, are padded with zeros.

10. The method according to claim 6, wherein
in a case where the multiple downlink FDMA channels correspond to the one AMP device, a target downlink FDMA channel among the multiple downlink FDMA channels carries identifier information of the AMP device corresponding to the multiple downlink FDMA channels.

11. The method according to claim 10, wherein
the target downlink FDMA channel is a primary downlink FDMA channel among the multiple downlink FDMA channels, or the target downlink FDMA channel is a downlink FDMA channel with a largest index among the multiple downlink FDMA channels or a downlink FDMA channel with a lowest index among the multiple downlink FDMA channels.

12. The method according to claim 10 or 11, wherein
in a case where a length of downlink data to be transmitted is fixed and the downlink data to be transmitted does not occupy all downlink FDMA channels among the multiple downlink FDMA channels, a part of the multiple downlink FDMA channels, which are not occupied by the downlink data to be transmitted, are padded with zeros.

13. The method according to any one of claims 1 to 12, wherein in a case where the AMP device supports the uplink FDMA, a corresponding relationship exists between a legacy preamble and the uplink FDMA channel; and/or in a case where the AMP device supports the downlink FDMA, a corresponding relationship exists between a legacy preamble and the downlink FDMA channel.

14. The method according to claim 13, wherein
the corresponding relationship between the legacy preamble and the uplink FDMA channel comprises at least one of:
one legacy preamble corresponds to one uplink FDMA channel, or one legacy preamble corresponds to multiple uplink FDMA channels.

15. The method according to claim 13 or 14, wherein a number of uplink FDMA channels corresponding to a single AMP device is determined based on a bandwidth of the legacy preamble, or a number of uplink FDMA channels corresponding to a single AMP device is agreed upon by a protocol, or a number of uplink FDMA channels corresponding to a single AMP device is configured by a network.

16. The method according to claim 13, wherein
the corresponding relationship between the legacy preamble and the downlink FDMA channel comprises at least one of:
one legacy preamble corresponds to one downlink FDMA channel, or one legacy preamble corresponds to multiple downlink FDMA channels.

17. The method according to claim 13 or 16, wherein a number of downlink FDMA channels corresponding to a single AMP device is determined based on a bandwidth of the legacy preamble, or a number of downlink FDMA channels corresponding to a single AMP device is agreed upon by a protocol, or a number of downlink FDMA channels corresponding to a single AMP device is configured by a network.

18. A wireless communication method, comprising:
negotiating, by a network device, first information with an ambient power, AMP, device; wherein the first information is used for indicating whether the AMP device supports uplink frequency division multiple access, FDMA, and/or downlink FDMA.

19. The method according to claim 18, wherein in a case where the AMP device supports the uplink FDMA and/or the downlink FDMA, the first information comprises at least one of:
a maximum number of uplink FDMA channels supported by the AMP device;
a maximum number of downlink FDMA channels supported by the AMP device;
a maximum number of downlink FDMA channels supported by the AMP device in a case where multiple downlink FDMA channels perform addressing;
a maximum frequency offset between multiple uplink FDMA channels supported by the AMP device;
a maximum frequency offset between multiple downlink FDMA channels supported by the AMP device;
a number of uplink FDMA channels;
a number of downlink FDMA channels;
at least one frequency offset between multiple uplink FDMA channels;
at least one frequency offset between multiple downlink FDMA channels;
whether multiple uplink FDMA channels correspond to a same legacy preamble;
whether multiple downlink FDMA channels correspond to a same legacy preamble;
in a case where multiple uplink FDMA channels correspond to a same legacy preamble, a maximum number of uplink FDMA channels within one preamble bandwidth; or
in a case where multiple downlink FDMA channels correspond to a same legacy preamble, a maximum number of downlink FDMA channels within one preamble bandwidth.

20. The method according to claim 18 or 19, wherein
in a case where the AMP device supports the uplink FDMA and/or the downlink FDMA, the method further comprises:
dynamically configuring, by the network device, second information for the AMP device;
wherein the second information comprises at least one of: a number of uplink FDMA channels, a number of downlink FDMA channels, at least one frequency offset between multiple uplink FDMA channels, or at least one frequency offset between multiple downlink FDMA channels.

21. The method according to any one of claims 18 to 20, wherein
in a case where the AMP device supports the uplink FDMA, a number of uplink FDMA channels is 2n; and/or
in a case where the AMP device supports the downlink FDMA, a number of downlink FDMA channels is 2m;
wherein n and m are both positive integers.

22. The method according to claim 21, wherein
in the case where the AMP device supports the uplink FDMA, in response to a bandwidth of the uplink FDMA channel being 1 MHz, 2 MHz, 8 MHz, or 16 MHz, a maximum number of the uplink FDMA channels is 16; and/or in response to a bandwidth of the uplink FDMA channel being 250 kHz, a maximum number of the uplink FDMA channels is 20; and/or
in the case where the AMP device supports the downlink FDMA, in response to a bandwidth of the downlink FDMA channel being 1 MHz, 2 MHz, 8 MHz, or 16 MHz, a maximum number of the downlink FDMA channels is 16; and/or in response to a bandwidth of the downlink FDMA channel being 250 kHz, a maximum number of the downlink FDMA channels is 20.

23. The method according to any one of claims 18 to 22, wherein
in a case where the AMP device supports the uplink FDMA, one uplink FDMA channel corresponds to one network device, or multiple uplink FDMA channels correspond to one network device; and/or
in a case where the AMP device supports the downlink FDMA, one downlink FDMA channel corresponds to one AMP device, or multiple downlink FDMA channels correspond to one AMP device.

24. The method according to claim 23, wherein
in a case where the multiple uplink FDMA channels correspond to the one network device, a target uplink FDMA channel among the multiple uplink FDMA channels carries identifier information of the network device corresponding to the multiple uplink FDMA channels.

25. The method according to claim 24, wherein
the target uplink FDMA channel is a primary uplink FDMA channel among the multiple uplink FDMA channels, or the target uplink FDMA channel is an uplink FDMA channel with a largest index among the multiple uplink FDMA channels or an uplink FDMA channel with a lowest index among the multiple uplink FDMA channels.

26. The method according to claim 24 or 25, wherein
in a case where a length of uplink data to be transmitted is fixed and the uplink data to be transmitted does not occupy all uplink FDMA channels among the multiple uplink FDMA channels, a part of the multiple uplink FDMA channels, which are not occupied by the uplink data to be transmitted, are padded with zeros.

27. The method according to claim 23, wherein
in a case where the multiple downlink FDMA channels correspond to one AMP device, a target downlink FDMA channel among the multiple downlink FDMA channels carries identifier information of the AMP device corresponding to the multiple downlink FDMA channels.

28. The method according to claim 27, wherein
the target downlink FDMA channel is a primary downlink FDMA channel among the multiple downlink FDMA channels, or the target downlink FDMA channel is a downlink FDMA channel with a largest index among the multiple downlink FDMA channels or a downlink FDMA channel with a lowest index among the multiple downlink FDMA channels.

29. The method according to claim 27 or 28, wherein
in a case where a length of downlink data to be transmitted is fixed and the downlink data to be transmitted does not occupy all downlink FDMA channels among the multiple downlink FDMA channels, a part of the multiple downlink FDMA channels, which are not occupied by the downlink data to be transmitted, are padded with zeros.

30. The method according to any one of claims 18 to 29, wherein in a case where the AMP device supports the uplink FDMA, a corresponding relationship exists between a legacy preamble and the uplink FDMA channel; and/or in a case where the AMP device supports the downlink FDMA, a corresponding relationship exists between a legacy preamble and the downlink FDMA channel.

31. The method according to claim 30, wherein
the corresponding relationship between the legacy preamble and the uplink FDMA channel comprises at least one of:
one legacy preamble corresponds to one uplink FDMA channel, or one legacy preamble corresponds to multiple uplink FDMA channels.

32. The method according to claim 30 or 31, wherein a number of uplink FDMA channels corresponding to a single AMP device is determined based on a bandwidth of the legacy preamble, or a number of uplink FDMA channels corresponding to a single AMP device is agreed upon by a protocol, or a number of uplink FDMA channels corresponding to a single AMP device is configured by a network.

33. The method according to claim 30, wherein
the corresponding relationship between the legacy preamble and the downlink FDMA channel comprises at least one of:
one legacy preamble corresponds to one downlink FDMA channel, or one legacy preamble corresponds to multiple downlink FDMA channels.

34. The method according to claim 30 or 33, wherein a number of downlink FDMA channels corresponding to a single AMP device is determined based on a bandwidth of the legacy preamble, or a number of downlink FDMA channels corresponding to a single AMP device is agreed upon by a protocol, or a number of downlink FDMA channels corresponding to a single AMP device is configured by a network.

35. The method according to any one of claims 18 to 34, wherein
the network device is one of: an access point, AP, a transmission reception point,TRP, and a base station.

36. An ambient power, AMP, device, comprising:
a communication unit, configured to negotiate first information with a network side; wherein the first information is used for indicating whether the AMP device supports uplink frequency division multiple access, FDMA, and/or downlink FDMA.

37. A network device, comprising:
a communication unit, configured to negotiate first information with an ambient power, AMP, device; wherein the first information is used for indicating whether the AMP device supports uplink frequency division multiple access, FDMA, and/or downlink FDMA.

38. An ambient power, AMP, device, comprising: a processor and a memory, wherein the memory is configured to store a computer program, and the processor is configured to call the computer program stored in the memory and run the computer program, to enable the AMP device to perform the method according to any one of claims 1 to 17.

39. A network device, comprising: a processor and a memory, wherein the memory is configured to store a computer program, and the processor is configured to call the computer program stored in the memory and run the computer program, to enable the network device to perform the method according to any one of claims 18 to 35.

40. A chip, comprising: a processor, configured to call a computer program from a memory and run the computer program, to enable a device equipped with the chip to perform the method according to any one of claims 1 to 17.

41. A chip, comprising: a processor, configured to call a computer program from a memory and run the computer program, to enable a device equipped with the chip to perform the method according to any one of claims 18 to 35.

42. A computer-readable storage medium, configured to store a computer program, wherein when the computer program is executed, the method according to any one of claims 1 to 17 is implemented.

43. A computer-readable storage medium, configured to store a computer program, wherein when the computer program is executed, the method according to any one of claims 18 to 35 is implemented.

44. A computer program product, comprising computer program instructions, wherein when the computer program instructions are executed, the method according to any one of claims 1 to 17 is implemented.

45. A computer program product, comprising computer program instructions, wherein when the computer program instructions are executed, the method according to any one of claims 18 to 35 is implemented.

46. A computer program, wherein when the computer program is executed, the method according to any one of claims 1 to 17 is implemented.

47. A computer program, wherein when the computer program is executed, the method according to any one of claims 18 to 35 is implemented.
